Europäisches Patentamt

European Patent Office

Office européen des brevets

(19)

(11) Publication number:
0 316 883
A2

(12) **EUROPEAN PATENT APPLICATION**

(21) Application number: 88119046.6

(22) Date of filing: 15.11.88

(51) Int. Cl.4: **H04M 1/274**

(30) Priority: **19.11.87 JP 292765/87**

(43) Date of publication of application:
**24.05.89 Bulletin 89/21**

(84) Designated Contracting States:
**DE FR GB SE**

(71) Applicant: **TOKYO ELECTRIC CO., LTD.**
**6-13, 2-chome, Nakameguro**
**Meguro-ku Tokyo(JP)**

(72) Inventor: **Izawa, Shoji**
**870-1, Sokoji Oohito-cho Tagata-gun**
**Shizuoka-ken(JP)**

(74) Representative: **Schoppe, Fritz et al**
**Schoppe - Schmitz - Weber Patentanwälte**
**Ludwig-Ganghofer-Strasse 20**
**D-8022 Grünwald bei München(DE)**

(54) **Facsimile device.**

(57) A facsimile device includes a plurality of one-touch buttons (25A to 25R) and a memory unit (44) for storing telephone numbers of a plurality of to-be-communicated objects. The facsimile device further includes a book panel (29) selectively set in a predetermined position to indicate the indices of the one-touch buttons (25A to 25R), an optical sensor (33) for detecting that the book panel (29) is set in the predetermined position, and button function converting circuit (41) for causing the one-touch buttons (25A to 25R) to function as one-touch dialing buttons which are operated to read out corresponding telephone numbers of the specified communication objects from the memory unit (44) and effect the dialing operation when the optical sensor (33) has detected that the name panel (29) is set in the predetermined position, and causing the one-touch buttons (25A to 25R) to function as input buttons having functions different from the one-touch buttons (25A to 25R) when the optical sensor (33) has detected that the name panel (29) is not set in the predetermined position.

F I G. 4

## Facsimile device

This invention relates to a facsimile device having a one-touch dialing function.

In general, a facsimile device has an automatic dialing function such as an abbreviated dialing function and group dialing function in order to simplify the dialing operation for calling up a to-be-communicated facsimile device. Recently, a high-class facsimile device which further has a one-touch dialing function is provided. The one-touch dialing function is used to call up a specified facsimile device which is to be frequently communicated with the present facsimile device. In this case, the telephone number of the specified facsimile device is automatically dialed by simply depressing a corresponding one-touch dialing button.

The above dialing functions are accompanied by various processes such as a setting process for previously setting the phone numbers of the specified facsimile devices and a printing process for printing a list of the currently set phone numbers. Conventionally, various function keys and dial setting numeral buttons are used to selectively start the above processes. That is, each process starting command is input into the facsimile device by operating one of the function keys and at least one of the numeral buttons.

In this way, if the function key is operated in combination with the numeral button, it is necessary for the user to memorize the combination of the function key and the numeral button to effect a desired process. However, recently, the facsimile device is formed to have more functions and the number of processes increases, and it id difficult for the user to memorize all the combinations the function keys and the numeral buttons. Therefore, the user will have to frequently refer to the operation manual, lowering the operability thereof.

The lowering in the operability may be prevented by, for example, independently providing input buttons for starting the various processes. However, in this case, the total number of buttons increases, thus making the operation panel large and the manufacturing cost high. Therefore, the above solution is not effective.

An object of this invention is to provide a facsimile device in which unwanted increase in the number of buttons can be prevented and an excellent operability can be attained.

The above object can be attained by a facsimile device comprising a plurality of one-touch buttons; a book panel selectively set in a predetermined position to indicate the indices of the one-touch buttons; a memory unit for storing a plurality of telephone numbers of specified objects to be communicated; a sensor for detecting that the book panel is set in the predetermined position; and a button function converting circuit for causing the one-touch buttons to function as one-touch dialing buttons which are operated to read out corresponding telephone numbers of the specified objects from the memory unit and effect the dialing operation when the sensor has detected that the book panel is set in the predetermined position, and causing the one-touch buttons to function as input buttons having functions different from the one-touch buttons when the sensor has detected that the book panel is not set in the predetermined position.

With the facsimile device of this invention, the one-touch buttons can be operated as the input buttons for inputting staring commands of the setting process for setting phone numbers of the specified objects such as facsimile devices to be communicated and the printing process for printing the list of the phone numbers of the specified facsimile devices. In this case, it is not necessary to provide a plurality of function keys independently from the one-touch buttons in order to selectively input the starting commands. Further, the input operation of the starting command can be completed by operating only the one-touch button, thus enhancing the operability.

This invention can be more fully understood from the following detailed description when taken in conjunction with the accompanying drawings, in which:

Fig. 1 is a view showing the appearance of a facsimile device according to one embodiment of this invention;

Fig. 2 is a view showing the detail construction of an operation unit of Fig. 1 with a book panel set in the closed condition;

Fig. 3 is a view showing the detail construction of the operation unit of Fig. 1 with the book panel set in the open condition;

Fig. 4 is a circuit diagram of the facsimile device of Fig. 1; and

Fig. 5 is a flowchart showing the operation of the facsimile device of Fig. 1.

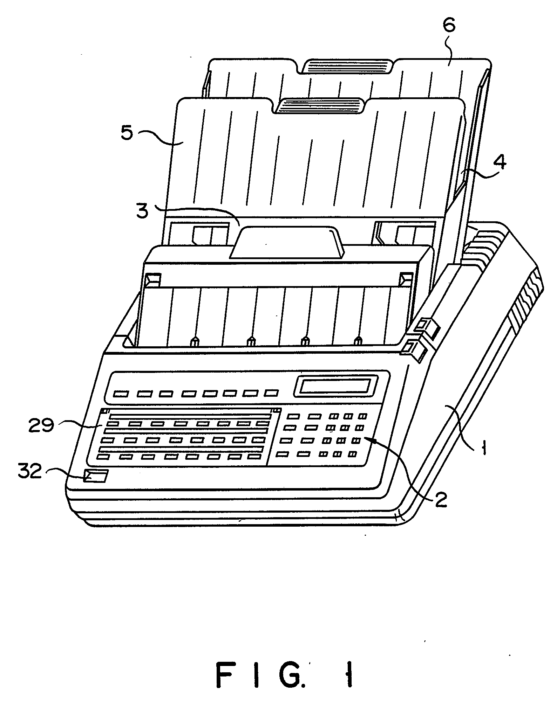

There will now be described a facsimile device according to an embodiment of this invention with reference to Figs. 1 to 5. Fig. 1 shows the appearance of the facsimile device. The facsimile device includes causing 1, operation unit 2, original insertion port 3, original discharging port 4, transmission original guide plate 5 and reception original guide plate 6. Operation unit 2 is arranged in the front upper portion of casing 1, and original insertion port 3 and original discharging port 4 are formed in the rear upper portion of casing 1. Transmission original guide plate 5 is mounted to define original insertion port 3 and reception original guide plate 6 is mounted to define original discharging port 4.

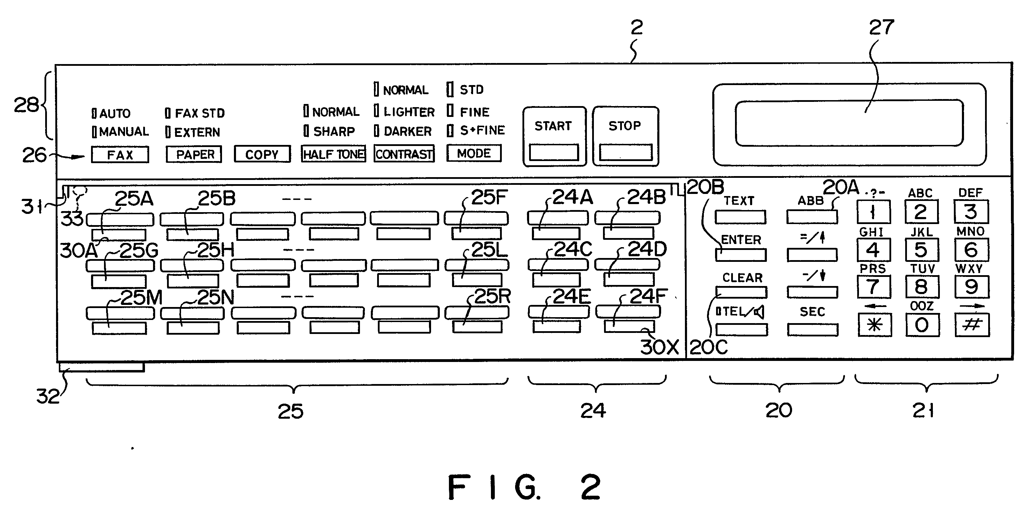

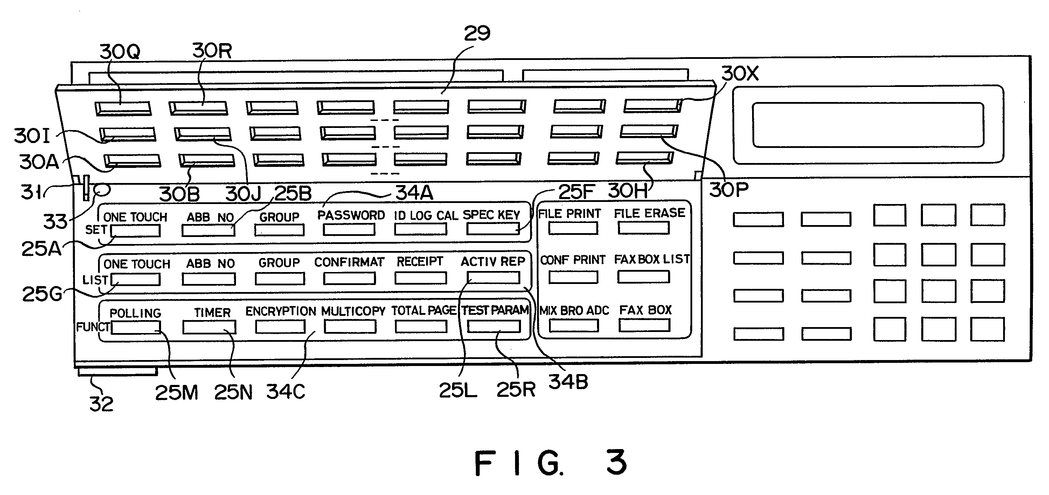

Figs. 2 and 3 shows the detail construction of operation unit 2. Operation unit 2 includes execution section 20, push-phone dialing section 21, group selecting section 24, one-touch input section 25, function controller 26, liquid crystal display unit 27 and LED setion 8. Liquid crystal section 27 is used to display and phone number dialed, dialing time, message and the like, and LED section 28 is used to display the operating conditions set by function controller 26. Function controller 26 incudes various control buttons of "automatic", "manual", "copy", "half-tone", "contrast", "mode", "start" and "stop" which are generally provided in the normal facsimile devices. Execution section 20 includes abbreviated dialing specifying button 20A, enter button 20B, clear button 20C and various execution buttons. Push-phone dialing section 21 includes numeral buttons of "0" to "9", and symbol buttons of "*" and "#". Group selecting section 24 includes six group selecting buttons 24A to 24F arranged in a matrix form of 3 rows × 2 columns. One-touch input section 25 includes 18 one-touch dialing buttons 25A to 25R arranged in a matrix form of 3 row × 6 columns.

The facsimile device further includes book panel 29 mounted on operation unit 2 so as to be freely rotated through 180° with respect to axis 31 and set into an open or closed condition, recess 32 for permitting book panel 29 to be easily opened by a finger, optical sensor 33 for detecting the open or closed condition of book panel 29, and index indicating section 34 which is covered with or hidden by book panel 29 when it is set in the closed condition. Book panel 29 has openings 30A to 30X corresponding to one-touch dial buttons 25A to 25R and group selection buttons 24A to 24F, and portions of book panel 29 which surround openings 30A to 30X may be used as areas on which indices indicating the names of the to-be-communicated object (A Co., B Co., ---; X group, Y group, ---) are written.

When book panel 29 is set into the closed condition as shown in Fig. 2, one-touch dial buttons 25A to 25R are each used for one-touch dialing transmission effected by dialing the phone number of a corresponding specified to-be-communicated object, for example, a facsimile device. In this case, one-touch dial buttons 25A to 25R and group selection buttons 24A to 24F are formed to project from openings 30A to 30X, respectively, and the indices written on book panel 29 are respectively assigned to one-touch dial buttons 25A to 25R.

When book panel 29 is set into the open condition as shown in Fig. 3, one-touch dial buttons 25A to 25R are each used to input a starting command for a corresponding one of the predetermined processes contained in the functions of the facsimile device. In this case, one-touch dial buttons 25A to 25F are allotted for effecting the data setting processes for the one-touch dialing function, abbreviated dialing function, group dialing function, pass word function, self-ID transmission function and confidential transmission function. Further, one-touch dial buttons 25G to 25L are allotted for effecting the data list printing processes for the one-touch dialing function, abbreviated dialing function, group dialing function, timer confirmation function, latest communication acknowledgement function, and activity report function. Likewise, one-touch dial button 25M to 25R are allotted for effecting the processes of special functions, that is, polling function, timer function, encryption function, multi-copy function, total page function and test parameter function. Index indicating section 34 has section indicating areas 34A, 34B and 34C which correspond to the various data setting process, various data list printing process and specified function execution process and which are colored in red, yellow and blue, respectively. The aforementioned function names are written as the indices of one-touch dial buttons 25A to 25R on the corresponding areas. Optical sensor 33 is a sensor constituted by a set of light emitting element and a light receiving element. When book panel 29 is set in the closed condition, light emitted from the light emitting element is reflected at book panel 29 and is applied to the light receiving element. In contrast, when book panel 29 is set in the open condition, light emitted from the light emitting element is not reflected from book panel 29 towards the light receiving element. In this way, optical sensor 33 detects that book panel 29 is set in the closed condition when the light receiving element has received the reflected light, and detects that book panel 29 is set in the open condition when the light receiving element has not received the reflected light.

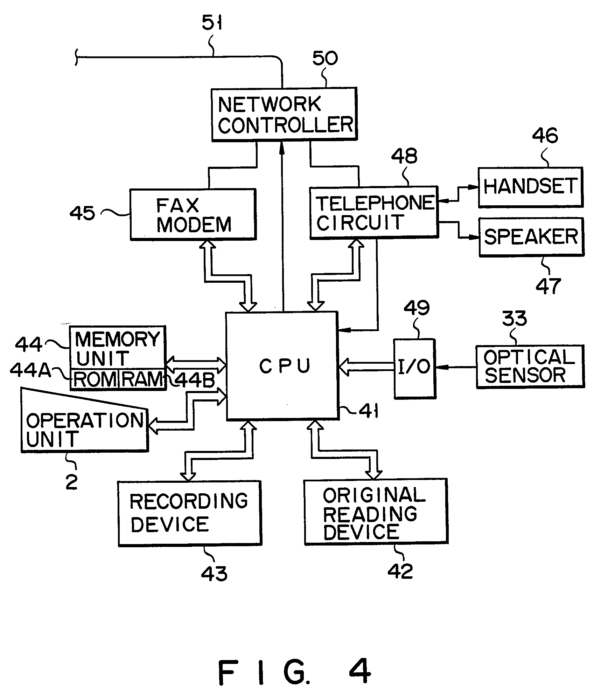

Fig. 4 is a circuit diagram of the facsimile device. The facsimile device includes CPU 41, original reading device 42, recording device 43, memory unit 44, facsimile modem 45, handset 46, speaker 47, telephone circuit 48, I/O port 49, and network control device 50. CPU 41 is connected to operation unit 2, original reading device 42, recording device 43, memory unit 44, facsimile mode 45, telephone circuit 48, I/O port 49, and network control device 50 to control the whole operation of the facsimile device. Handset 46 and speaker 47 are connected to telephone circuit 48. FAX modem 45 and telephone circuit 48 are connected to network control device 50 which in turn is connected to telephone line 51. I/0 port 49 is connected to optical sensor 33. Memory unit 44 includes ROM 44A for storing the control program for CPU 41 and RAM 44B for temporarily storing I/O data of CPU 41. RAM 44B includes memory areas allocated for one-touch dial buttons 25A to 25R and each storing one telephone number of a to-be-communicated facsimile. Further, original reading device 42 is used to optically read image such as characters and patterns of transmission original inserted into original insertion port 3, and convert the image into electrical image data. Recording device 43 is used to print the received image data or various data on recording paper. Network control device 50 serves to selectively connect one of FAX modem 45 and telephone circuit 48 to telephone line 51. When the facsimile device is set in the transmission/reception ready condition, telephone line 51 is connected to telephone circuit 48.

In the facsimile transmission mode, when one of one-touch dial buttons 25A to 25R is operated, an operation signal is generated in response to the button operation and supplied from operation unit 2 to CPU 41. When the operation signal is detected by CPU 41, a telephone number of the corresponding to-be-communicated facsimile is read out from memory unit 44 and telephone circuit 48 effects the dialing operation based on the readout telephone number. Network control device 50 is controlled to connect the telephone line to FAX modem 45 instead of telephone circuit 48 after the dialing operation is competed. After the dialing operation is completed, original reading device 42 is permitted to start reading image on the transmission original. Image data generated from original reading device 42 is supplied to FAX modem 45 by means of CPU 41 and is converted into a facsimile signal format by means of FAX modem 45. The facsimile signal is transmitted from FAX modem 45 via network control device 50 and telephone line 51.

In the facsimile reception mode, when the facsimile device is called via telephone line 51, telephone circuit 48 detects the call and informs CPU 41 of this fact. As a result, network control device 50 connects telephone line 51 to FAX modem 45, and FAX modem 45 extracts image data from the received facsimile signal. The image data is supplied to recording device 43 via CPU 41 which in turn prints the image data on the recording paper.

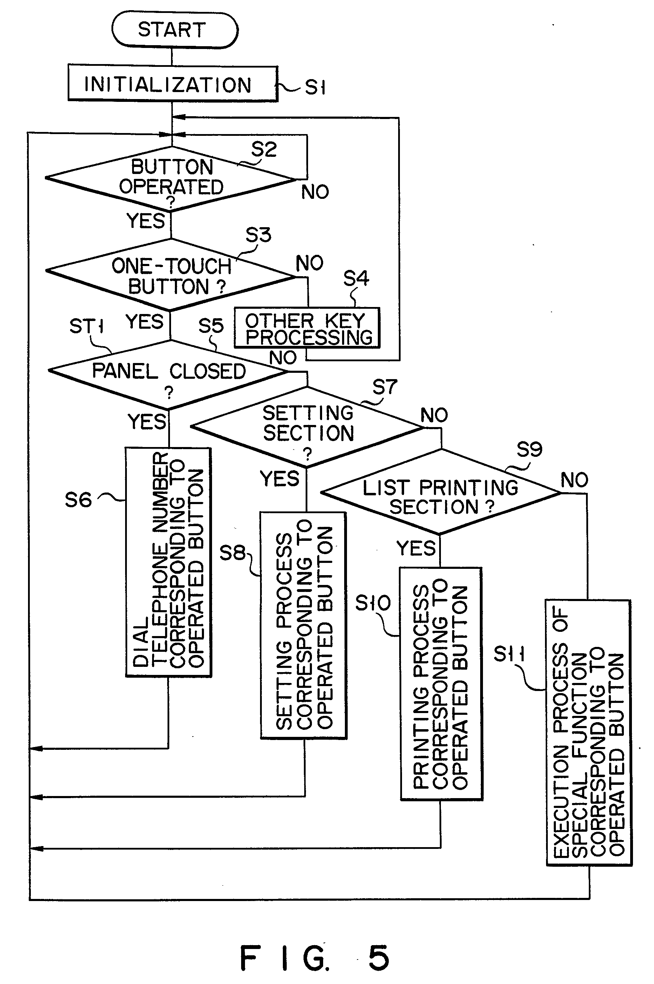

Fig. 5 is a flowchart showing the operation of the facsimile device. After the power source is turned on, the facsimile device starts the operation shown in Fig. 5. After the operation is started, the initialization process is first effected in step S1, and then it is repeatedly checked in step S2 whether or not the button input operation is effected. When the button input operation is detected, it is checked in step S3 whether or not the operated button is one of one-touch dial buttons 25A to 25R. If it is detected that none of the one-touch dial buttons is operated, the process corresponding to the operated button is effected in step S4, and then step S2 is effected again. If it is detected in step S3 that the operated button is one of one-touch dial buttons 25A to 25R, it is checked in step S5 whether book panel 29 is set in the closed condition or not. When it is detected that book panel 29 is set in the closed condition, the telephone number of a to-be-communicated facsimile corresponding to the operated button is dialed to effect the facsimile transmission process in step S6. In contrast, when book panel 29 is set in the open condition, it is checked in step S7 whether or not the operated button is one of one-touch dial buttons 25A to 25F of the setting process section. When it is detected that the operated button is one of one-touch dial buttons 25A to 25F of the setting process section, the setting process corresponding to the operated button is effected in step S8, and then step S2 is effected again. In contrast, when the operated button is different from any one of one-touch dial buttons 25A to 25F of the setting process section, it is checked in step S9 whether or not the operated button is one of one-touch dial buttons 25G to 25L of the list printing process section. When it is detected that the operated button is one of one-touch dial buttons 25G to 25L of the setting process section, the list printing process corresponding to the operated button is effected in step S10, and then step S2 is effected again. Further, when it is detected that the operated button is different from any one of one-touch dial buttons 25G to 25L of the list printing process section, the special function execution process corresponding to the operated button is effected in step S11, and then step S2 is effected again.

In the above facsimile device, book panel 29 is usually kept in the closed condition so as to permit the one-touch dial transmission to be effected at any time.

When the setting process of the one-touch dial function is effect, for example, book panel 29 is set into the open condition, and one-touch dial button 25A is operated with reference to the indices of one-touch dial buttons 25A to 25R indicated by index indicating section 34. As a result, the setting process of the one-touch dial function can be started. In the setting process, a desired one of one-touch dial buttons 25A to 25R is assigned to the to-be-communicated object or facsimile to be set or registered and is operated to specify a one-touch dial button, and numeral buttons of dial section 21 are operated to input the telephone number of the to-be-communicated facsimile.

When the list printing process of the one-touch dial function is effected, book panel 29 is set into the open condition, and one-touch dial button 25G is operated with reference to the indices of one-touch dial buttons 25A to 25R indicated by index indicating section 34. As a result, the list printing process of the one-touch dial function can be started. In the list printing process, all the telephone numbers corresponding to one-touch dial buttons 25A to 25R are read out from memory unit 44 and printed.

When the execution process of the polling function is effected, book panel 29 is set into the open condition, and one-touch dial button 25M is operated with reference to the indices of one-touch dial buttons 25A to 25R indicated by index indicating section 34. As a result, the execution process of the polling function can be started.

Further, when the one-touch dial transmission process is effected, book panel 29 is into the closed condition, and one of one-touch dial buttons 25A to 25R, for example, one-touch dial button 25F is operated with reference to the indices of one-touch dial buttons 25A to 25R indicated by book panel 29. As a result, the one-touch dial transmission process can be started. In the one-touch dial transmission process, a corresponding to-be-communicated facsimile is specified by operated one-touch dial button 25F, and the telephone number of the specified to-be-communicated facsimile is read out from memory unit 44 and dialed.

In the above embodiment, the staring command for process relating to each function can be input to the facsimile device by a simple operation of setting book panel 29 into the open condition and depressing one of one-touch dial buttons 25A to 25R. Further, since the button operation can be effected with reference to the indices of one-touch dial buttons 25A to 25R indicated by index indicating section 34, the operability can be enhanced.

Further, since one-touch dial buttons 25A to 25R function as input buttons for inputting the starting command of various processes other than the one-touch dial transmission process when book panel 29 is set in the open condition, it is not necessary to provide input buttons separately from one-touch dial buttons 25A to 25R in order to input the starting command for the various processes. In other words, increase in the total number of buttons can be suppressed, thus preventing operation unit 2 from being made large and the manufacturing cost from being made high.

Further, the one-touch dial buttons on each row are used to input the starting command for the similar processes and section indicating areas 34A, 34B and 34C are set in different colors. As a result, the operability is further enhanced.

This invention is not limited to the above embodiment, and can be variously modified without departing from the scope of this invention.

For example, in the above embodiment, the functions of one-touch dial buttons 25A to 25R are modified when book panel 29 is set into the open condition. However, in this case, it is possible to cause group selection buttons 24A to 24F to function as a memory button, memory erase button, file printing button, file listing button and the like as in the case of one-touch dial buttons 25A to 25R. The memory button is used to permit original reading device 42 to read image of the transmission original when the transmission original is set in original insertion port 3 and store the read image data as an image file into memory unit 44. The memory button is also used to permit one image file stored in memory unit 44 to be transmitted when the transmission original is not set in original insertion port 3. The memory erase button is used to erase one image film from memory unit 44. The file printing button is used to print one image file stored in memory unit 44. The file listing button is used to output the list of all the image files stored in memory unit 44. In addition, if a plurality of image files have been stored in memory unit 44 when any one of the memory button, memory erase button, and file print button is operated, numeral buttons of dial section 21 are selectively to specify one of the image files.

In the above embodiment, the one-touch dial buttons on each row are used to input the starting command for the similar processes, but it is possible to use the one-touch dial buttons on each column so as to input the starting command for the similar processes.

In the above embodiment, the setting process of various data, the list printing process of various data and the execution process of the specified functions are set as the processing sections, but processing sections other than these processing sections can be set.

In the above embodiment, optical sensor 33 is used to detect the open or closed condition of book panel 29, but it may be replaced by a mechanical switch.

Further, book panel 29 is mounted so as to be selectively set into the open or closed condition, but it is also possible to detachably mount book panel 29.

## Claims

1. A facsimile device comprising:
a plurality of one-touch buttons (25A to 25R); and memory means (44) for storing a plurality of telephone numbers of specified objects to be communicated;characterized by further comprising

a name panel (29) selectively set in a predetermined position to indicate the indices of said one-touch buttons (25A to 25R); sensor means (33) for detecting that said name panel (29) is set in the predetermined position; and button function converting means (41) for causing said one-touch buttons to function (25A to 25R) as one-touch dialing buttons which are operated to read out corresponding telephone numbers of said specified to-be-communicated objects from said memory means (44) and effect the dialing operation when said sensor means (33) has detected that said name panel (29) is set in the predetermined position, and causing said one-touch buttons (25A to 25R) to function as input buttons having functions different from said one-touch buttons (25A to 25R) when said sensor means (33) has detected that said name panel (29) is not set in the predetermined position.

2. A facsimile device according to claim 1, characterized in that said name panel is a name panel (29) which is mounted to be selectively set into the open or closed condition and is set in the predetermined position when set in the closed condition.

3. A facsimile device according to claim 2, characterized in that a first one (25A) of said plurality of one-touch buttons (25A to 25R) functions as an input button which is operated to input the starting command of the setting process for storing the telephone number of the specified to-be-communicated object corresponding to each of said one-touch dial buttons into said memory means (44) when it is detected that said name panel (29) is not set in the predetermined position.

4. A facsimile device according to claim 3, characterized in that a second one (25G) of said plurality of one-touch buttons (25A to 25R) functions as an input button when is operated to input the starting command of the printing process for printing the list of the telephone numbers of the specified to-be-communicated objects stored in said memory means (44) in the setting process when it is detected that said name panel (29) is not set in the predetermined position.

5. A facsimile device according to claim 4, characterized in that a third one (25M) of said plurality of one-touch buttons (25A to 25R) functions as an input button which is operated to input the starting command of the execution process of special functions when it is detected that said name panel (29) is not set in the predetermined position.

6. A facsimile device according to claim 1, characterized in that said plurality of one-touch buttons (25A to 25R) are arranged in a matrix form and those one-touch buttons which are arranged on the same row or column are operated to effect similar processes when it is detected that said name panel (29) is not set in the predetermined position.

7. A facsimile device according to claim 1, characterized in that a predetermined number of said one-touch buttons (25A to 25R) functions as input buttons which are operated to input the starting commands of similar setting processes when it is detected that said name panel (29) is not set in the predetermined position.

8. A facsimile device according to claim 1, characterized in that a predetermined number of said one-touch buttons (25A to 25R) function as input buttons which are operated to input the starting commands of similar printing processes when it is detected that said name panel (29) is not set in the predetermined position.

9. A facsimile device according to claim 1, characterized in that a predetermined number of said one-touch buttons (25A to 25R) function as input buttons which are operated to input the starting commands of similar execution processes when it is detected that said name panel (29) is not set in the predetermined position.

F I G. 1

28
26

AUTO · FAX STD · NORMAL · NORMAL · STD
MANUAL · EXTERN · SHARP · LIGHTER · FINE
· DARKER · S+FINE

FAX · PAPER · COPY · HALF TONE · CONTRAST · MODE

START · STOP

31
33
30A
25A · 25B · — — — · 25F · 24A · 24B · 20B · 20A
25G · 25H · — — — · 25L · 24C · 24D
25M · 25N · — — — · 25R · 24E · 24F
30X · 20C

TEXT · ABB · .?- · ABC · DEF
ENTER · =/↑ · 1 · GHI 4 · JKL 5 · MNO 6
CLEAR · -/↓ · PRS 7 · TUV 8 · WXY 9
TEL · SEC · ← 00Z · →
* · 0 · #

32
25 · 24 · 20 · 21

F I G. 2

EP 0 316 883 A2

FIG. 3

FIG. 4

START

INITIALIZATION — S1

S2
BUTTON OPERATED ? — NO
YES

S3
ONE-TOUCH BUTTON ? — NO
YES

S4
OTHER KEY PROCESSING

ST1 — S5
PANEL CLOSED ? — NO
YES

S7
SETTING SECTION ? — NO
YES

S9
LIST PRINTING SECTION ? — NO
YES

S6
DIAL TELEPHONE NUMBER CORRESPONDING TO OPERATED BUTTON

S8
SETTING PROCESS CORRESPONDING TO OPERATED BUTTON

S10
PRINTING PROCESS CORRESPONDING TO OPERATED BUTTON

S11
EXECUTION PROCESS OF SPECIAL FUNCTION CORRESPONDING TO OPERATED BUTTON

F I G. 5